# EUROPEAN PATENT APPLICATION

(11) **EP 2 679 654 A1**
(43) Date of publication of application: **01.01.2014**
(21) Application number: 12006010.8
(22) Date of filing: 22.08.2012
(51) Int. Cl.: C10B 53/07, C10G 1/10, C10B 57/06, F02B 43/08

(54) **The method for conducting of a pyrolysis process of waste plastics and/or rubber wastes and/or organic wastes and the installation for implementation of the method**

(30) Priority: 12.06.2012 PL 39950012
(71) Applicant: DAGAS Sp. z o.o., 05-660 Warka (PL)
(72) Inventor: Majcher, Marek, 05-660 Warka (PL); Przybylski, Wlodzimierz, 05-660 Warka (PL)
(74) Representative: Gizinska-Schohe, Malgorzata

(57) **Abstract**

The object of the invention is the method of conducting a pyrolysis process of plastic waste and/or rubber waste and/or organic waste, comprising subjecting these components to a thermal decomposition in a pyrolytic reactor without access of air, at a temperature of 200 to 850°C, and separation of the obtained products in the fractional column, characterized in that the process is carried out continuously and without any emissions, under reduced pressure, wherein, in the pyrolytic installation, the circulating gases are sucked by means of a vacuum pump from the tanks of final products and from the separator of solid and gaseous particles, also connected to the pyrolytic reactor, and from the fractional column, and from the heat exchangers, so that in all of these interconnected components of the pyrolytic installation, an even reduced pressure of 0.1 to 0.9 atm is maintained. The invention relates also to the installation for conducting this pyrolysis process.

## Description

The object of the invention is the method of conducting a pyrolysis process of plastic waste, in particular polyolefinic and/or rubber waste, particularly tires, and/or organic waste, such as biomass or municipal waste and the installation to carry out this method. The developed solution relates to the field of plastics and other organic waste disposal carried out in a way which is minimally imposing on the environment, being particularly an alternative to waste incineration.

In the era of increasing industrialization, the elimination, from our environment, of industrial waste and municipal waste, which contain undegradable plastics and rubber waste, especially such as all kinds of packaging, construction waste, car tires, scrap vehicles fraction containing polymer plastics, etc., still continues to be an incompletely solved problem.

Thermal decomposition of plastics, rubber or organic substances may be carried out by pyrolysis, gasification, hydrocracking, and incineration, which is the least favorable for the environment.

The pyrolysis process is a long-known method of thermal degradation (destructive distillation) of polymeric substances, which is most frequently carried out without any access of air (anaerobic atmosphere). Pyrolysis can be a low-temperature process (300 - 450°C) or a high temperature process (550 - 850°C). Through heat treatment of the feed in the pyrolysis reactor, pyrolytic gas, gasoline fractions, oil fractions, and mazout are obtained. In the process, metal products (after processing e.g. of tires) and other solid products, such as carbon black and graphite, are obtained.

Pyrolysis processes can be carried out under atmospheric pressure, elevated pressure and reduced pressure conditions. Elevated pressure is relatively easy to obtain, since in the pyrolysis process, gaseous products are formed spontaneously, and their relevant inspection and control lead to elevated pressure.

Wet biomass pyrolysis process carried out at elevated pressure is known from the European patent application EP2366757A1, the process being carried out continuously and the pressure being controlled in the reactor, so that it is at least 10 bar [9.87 atm].

Zero emission pyrolysis process of waste material containing carbon is known from the European patent application EP2348254A1, the process being conducted at a pressure of 10-15 bar and simultaneously, in the process, a stream of pure oxygen being delivered.

In the international patent application W00231082A1, a continuous process is presented, in which the pyrolysis is carried out in a reactor under reduced pressure, however, to ensure installation tightness, it is provided with at least two trays with airtight locks; the raw material is loaded alternately into subsequent trays, from which the air is removed. The reactor is fed from the tray, which is at the moment airtight and devoid of oxygen.

The European patent application EP2184334A1 discloses an installation in which a pyrolytic reactor operates under reduced pressure in an inert atmosphere, but this reactor has a complicated cascaded construction - it is divided into spatially separate sections, and in addition, in the reactor, an intensive mixing of the raw material subjected to the pyrolysis is carried out.

An installation for conducting pyrolysis of tires and hydrocarbons is known from the international patent application W02006039764A1, wherein the reactor is provided with an additional airtight separated region, in which tires are pre-heated and then the resultant gases and the air are pumped out, and this region is filled with the inert gas in order to maintain an anaerobic environment.

A major problem in the processes of pyrolysis is to adapt these processes to increasingly stringent environmental protection requirements. It is desirable to carry out the pyrolysis processes while minimizing the output of the exhaust gases and other gaseous products into the atmosphere. It is also desirable to carry out the pyrolysis processes in a continuous manner. The difficulties in this regard are e.g. associated with the need to interrupt the process in order to eliminate the deposition of quick coke on the installation (carbon black deposits). The process of improvement of the pyrolysis installation is also focused on providing an anaerobic atmosphere in the reactor environment. There is still a demand to improve the pyrolysis processes and to modify the pyrolysis installation to make them maximally environmentally friendly.

The object of the invention is to provide a method and an installation ensuring the simultaneous realization of all of the above mentioned tasks.

The object of the invention is the method of conducting a pyrolysis process of plastic waste and/or rubber waste and/or organic waste, comprising subjecting these components to a thermal decomposition in the pyrolytic reactor without access of air, at a temperature of 200 to 850°C, and separation of the obtained products in a fractional column, characterized in that the process is carried out continuously and without any emissions, under reduced pressure conditions, wherein in the pyrolytic installation, the circulating gases are sucked by the vacuum pump from the final product tanks and from the solid and gaseous particles separator, which is also connected to the pyrolytic reactor, and from the fractional column, and from the heat exchangers, so that in all of these interconnected components of the pyrolytic installation, an equalized reduced pressure of 0.1 to 0.9 atm, preferably 0.2 to 0.8 atm, is maintained.

The vacuum pump is constituted by a pump with a rotating water ring.

The pyrolytic gases sucked by the vacuum pump are pre-purified in this pump by contacting with water in the form of a rotating water ring.

The gases sucked by the pump are pumped into the absorber, where they are subjected to further purification, and then they are pumped into the engine as a feed gas.

Loading of the raw material into the reactor is carried out continuously by an airtight lock for the loading of raw materials and the solid products are collected from the lower part of the reactor in a continuous manner through an aqueous tight closure.

Into the reactor chamber, a chemical modifier composition is dosed, preferably in the form of a spray, comprising 10 to 30% by weight of water, 20 to 80% by weight of at least one aliphatic alcohol, 5 to 15% by weight of carbamide or its derivatives of R₁R₂N(CO)NR₃R₄ type, wherein R₁, R₂, R₃, R₄ are the same or different and constitute C₁-C₆ alkyl groups, and 5 to 15% by weight of monoacetylferrocene, this composition being, before dosing into the reactor, additionally diluted with water, so that, after dilution, it contains 5% by weight of composition and 95% by weight of water, up to 15% by weight of composition and 85% of water.

Preferably, 50 to 150 ml of the diluted modifier composition is dosed per 1 ton of plastic waste, especially polyolefinic, or 300 to 500 ml of the diluted composition per 1 ton of rubber waste.

The object of the invention is also an installation for conducting, under reduced pressure, without access of air, a continuous pyrolysis process of plastic waste and/or rubber waste and/or organic waste, comprising a pyrolytic reactor, a raw material feeder, a fractional column, heat exchangers and final product tanks, characterized in that it is provided with a vacuum pump connected, on the suction side, through the separator, to a fractional column and further to the reactor and, also on the suction side, connected to the final product tanks, and on the pumping side, connected, through the absorber, to the engine, wherein the reactor is provided with a raw material feeder comprising an airtight lock and, in its lower part, is provided with an aqueous tight closure for collecting solid products.

The pump is constituted by a vacuum pump with a rotating water ring.

The method according to the invention ensures conducting a zero emission pyrolysis process under reduced pressure. Elevated pressure may pose a risk of gases "escaping" from the installation in the event of a leak. On the other hand, carrying out the process at reduced pressure prevents the leakage of gases. To effectively maintain the reduced pressure in the installation, airtight "inputs" and "outputs" were used in the installation, i.e., e.g. an airtight lock for loading raw materials and an aqueous tight closure for collection e.g. of metal products (e.g. melted tire wires).

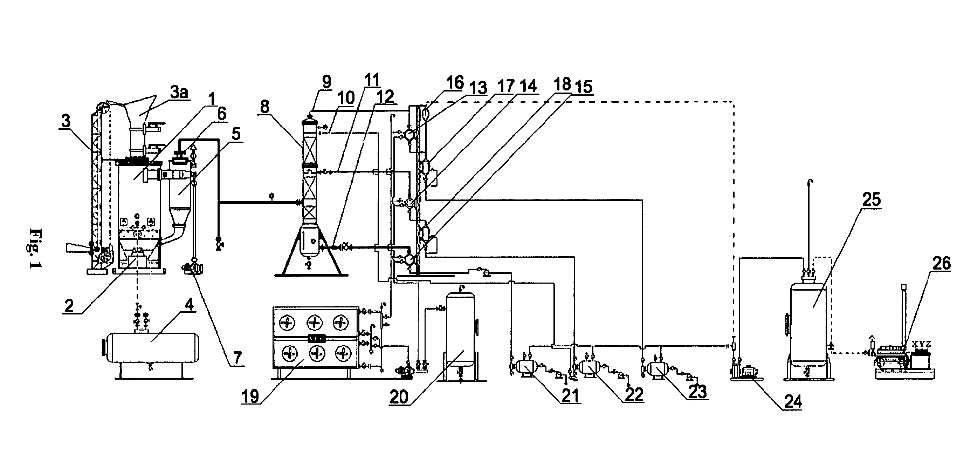

Without limiting the scope of the invention, an installation for carrying out the pyrolysis process by the method according to the invention is, as an example, schematically shown in Figure 1.

The installation for carrying out the pyrolysis process according to the invention is provided with a pyrolytic reactor 1, which has, in its lower part, a heating zone 2 and is connected to the raw material feeder 3, which has an airtight lock 3a for loading the raw material. The installation includes a fuel tank 4 for the reactor start-up. In its lower part, the reactor is provided with an aqueous closure 7 containing a safety valve. The reactor is connected to a cyclone 5 comprising a solid and gaseous particles separator 6, which is connected to a fractional column 8 of wet and dry gases. The column contains discharge lines for particular fractions: 9 - discharge line for dry and wet gases of gasoline fraction, 10 - discharge line for the column reflux, 11 - discharge line for the oil fraction, 12 -discharge line for the heavy fraction (mazout, carbon black, graphite). Discharge line 9 is connected to a cooler 13 of the gasoline fraction, discharge line 11 to a cooler 14 of the oil fraction and discharge line 12 to the heat exchanger 15 for the mazout fraction. The installation is also provided with a separator 16 of gas fraction - for the generator gas and a phase splitter 17 for the gasoline fraction delivered to the tank 23, a phase splitter 18 for the oil fraction delivered to the tank 22. The installation also includes a cooler 19 supplying the heat exchangers connected to the fractional column and an equalizing tank 20 of the cooling system. The installation is provided with final product tanks: a final product tank 21 - for mazout, a final product tank 22 - for oil fraction and a final product tank 23 - for gasoline fraction. The installation includes a vacuum pump 24, which contains a purification system of the gas fractions equipped with scrubbers. The pump 24 is connected, through the absorber 25 of the discharged gases, to the engine 26 comprising a power generator.

The pyrolytic reactor does not contain any technical means for mixing the substrates (crude depolymerized material) in the reactor chamber. This is a self-organizing type of reactor.

The presented installation ensures that the process is conducted without any emissions - and is devoid of any direct outlet of gases generated in the pyrolysis process. The installation also ensures that the pyrolysis is conducted without access of air (anaerobically). All the resulting products are purified either in the fractional column or by absorbers for the discharged gases. The installation operates continuously in a closed system. In the presented installation, an engine acting as a power generator is also included. In the engine, the gases generated in the process are used as a fuel. The installation meets high environmental standards regarding zero emission and trapping, in the adsorber and in the scrubbers, undesirable impurities present in the obtained products.

Pyrolytic installation is tight, which is assured by the fact that particular sections or parts of the installation are provided with sealing means (locks ensuring tightness), which maintain, in the installation, the vacuum achieved by the inclusion of the vacuum pump in the installation. Pressure maintained in the installation ranges from 0.1 to 0.9 atmospheres, preferably from 0.2 to 0.8 atmospheres. The installation is provided with airtight inputs and outputs, i.e., e.g. an airtight material loading system including an airtight loading lock. Solid waste from the pyrolysis process in the form of e.g. metal waste, after processing of tires, are collected from the tight aqueous closure e.g. by means of a conveyor incorporated in a tight manner into the system. Thanks to described tight closures, the installation operates in a continuous manner and without interrupting the process, both the raw materials can be supplied and the products can be collected through the aqueous closure. The vacuum pump is included in the installation behind the sections which contain or may contain pyrolytic gases so that, through these elements, the pump sucks gaseous fractions even from the pyrolytic reactor. In all parts of the installation containing pyrolytic gases, there is an even pressure, since these parts are connected to the pump and are also connected with each other.

The vacuum pump is connected to the reactor via the separator of the gaseous fraction of the generated gas and via, located in the fractional column, outlet of dry and wet gases of the gasoline fraction. The pump is also connected to the final product tanks of the gasoline, oil and mazout fractions. In this way, the pump sucks gaseous fractions from all of these elements of the installation, which may contain these fractions. Thanks to this, in the whole system of the installation, an even vacuum is maintained.

The installation according to the invention does not contain any direct output of any gases into the atmosphere (zero emission process). Only waste gases from the combustion in the engine are expelled, but the engine is supplied with the fuel gas having passed through the absorber and previously purified in the vacuum pump. The installation is powered neither by atmospheric air nor by oxygen. The process is carried out in an oxygen-free atmosphere. Neither inert gases are introduced into the installation. The circulation of the gases is based only on gases from the processes taking place in the reactor, the flow being forced partly by the vacuum pump.

The method and the installation according to the invention can be used to carry out the low-temperature and high-temperature pyrolysis.

Preferably, the suction system of the installation includes a pump or a blower with a rotating liquid (water) ring with a capacity of 45 to 6000 m3. Gas transportation system takes place in a manner forced by suction and then injection of the generator gases into the absorber. The pump or the blower is provided with an additional system for mixing the absorbent liquid with substrates obtained in the pyrolysis process (washing out gases). This system is based on the rotating liquid (process water) ring, which equips the pump or the blower. The resulting purified generator gases are transported to the absorber filled with a liquid substance, which is a liquid in the form of aqueous solutions with the addition of surfactants. The pumped in gas-liquid mixture is divided, in the absorber, into fractions absorbed in the liquid and dry gases devoid of undesirable substrates, such as chlorine, sulfur, heavy metals and others. In a further step the gas from the absorber is directed to the gas burners for the purpose of maintaining the process in the pyrolytic furnace or possibly directed to supply a thermal device. The product obtained in the process - pure pyrolytic (generator) gas can be used as a fuel for engines supplying the power generator. The liquid with absorbed chemical substances is pumped from the absorber to the installation of impulse current generator filled up with the deposit. The liquid is purified and after a refilling, by the system, of the dosing pumps with active substances, it is redirected again to the absorber as a process liquid.

In an exemplary embodiment, in the installation, a vacuum pump with a rotating water ring DW7 (Hydro-Vacuum S.A.) is used. These are rotary, valveless, positive displacement pumps. Working fluid (preferably water) forming a ring is introduced continuously and partially removed together with the pumped gas (should be refilled). Vacuum pumps and blowers are used for suction and injection of gases and vapors at a temperature of up to 100°C. The principle of operation of the compressor with a rotating liquid ring consists in the fact that a wing impeller with a large diameter hub is located in a cylindrical housing, partially filled with a liquid. After starting the pump, due to the rotation of the impeller, the fluid will be introduced into a circular motion and ejected onto the walls of the housing to form a liquid ring. If the impeller is arranged eccentrically relative to the housing, at the hub, there will be a crescent space devoid of liquid divided into separate chambers by impeller blades. In the side walls, constituting axial closure of chambers, there are holes - at the beginning (suction window) and at the end (injection window) of the crescent space. The gas is sucked in and then expelled outside. Blowers do not differ in the construction from single-stage vacuum pumps - these are reversible machines.

The method according to the invention can be carried out with the involvement of a typical catalyst or catalysts or without the involvement of a catalyst. In the method, a specific chemical additive was (optionally) used - eliminating quick coke deposition on the reactor components, especially in section most vulnerable to such processes, where heat is supplied. However, carbon black (coke) is still a product formed in the process. The additive facilitates its discharge from the reactor. Quick coke is collected in the lower parts of the reactor, which facilitates its discharge from the reactor.

The composition of the above mentioned chemical modifier was described in patent PL209480B1, where it was used in power boilers in combustion processes of solid, liquid and gas fuels. Thanks to the modifier, impurities containing carbon black were afterburned to CO₂.

Now, it has been found that in the pyrolysis process, which is conducted differently from the processes of combustion of organic fuels, the modifier has a positive effect - it acts selectively on the quick coke deposition processes, without any negative effects on the depolymerization processes occurring during pyrolysis (efficiency of the obtained fuel fractions in not reduced). The used modifier composition acts as a catalyst affecting selectively the transformations of the forming quick coke (carbon deposits). It was also noted that the use of the above mentioned chemical modifier favors the formation of the dry gas (mainly consisting of methane and ethane), in particular methane. In the pyrolysis process without the use of the modifier, 12 to 18% by weight of the dry gas is obtained, and with the use of the modifier according to the invention, higher efficiencies may be obtained, in special conditions up to 70% by weight of the dry gases.

The pyrolysis modifier is dosed into the reactor, preferably through a dispensing nozzle from an evaporator or an atomizer. However, other dosages of the composition are also possible - e.g. gravity spraying or feeding the modifier together with pyrolytic gases (or other gases) directed back to the reactor.

In the method according to the invention, other catalysts may be used, or, in addition to the above mentioned modifier, known catalysts may be used. Highly silicic additives, aluminosilicates (SiO₂ + Al₂O₃), catalysts based on zeolite, kaolin, oxides of rare earth metals, etc. are known as examples of catalysts used in the processes of pyrolysis. In the method according to the invention, an additional rutile - titanium catalyst (30% titanium/70% rutile) was used.

The main component of the above mentioned modifier used in the method according to the invention is a complex which is a carrier of iron - monoacetylferrocene, or cyclopenta - 1,3 diene; 1 - (1-cyclopenta - 2,4 - dienylideno) ethanolate of iron 2+ cation. The presence of hydroxyl groups in the reaction medium is of decisive importance in the occurring transformations. The modifier also contains a carbamide or its derivatives such as alkylurea of R₁R₂N(CO)NR₃R₄ type, wherein R₁, R₂, R₃, R₄ are the same or different and constitute C₁-C₆ alkyl groups, e.g. methylene or ethylene groups.

The aliphatic alcohols used in the modifier may have linear or branched chains. Pyrolysis modifier should contain at least one alcohol (OH groups carrier). Preferably the alcohol is selected from the C₂ - C₁₁ group of alcohols, more preferably C₃ - C₈, especially C₃-C₆. Ethanol, propanol, isopropanol, n-butanol, pentanol, heptanol and octanol are the examples of used alcohols. Through the selection of alcohol, the proportion of hydroxyl groups relative to the number of carbon atoms in the chain changes, and thereby the proportion of hydroxyl groups relative to the weight of the other components of the modifier changes. Preferred results are obtained in particular with the alcohols having intermediate chain lengths, such as isopropanol and n-butanol. Therefore, preferably, the mixture of these two alcohols is used in the modifier. However, the modifier may comprise only one alcohol from the said group or a mixture of three or four alcohols.

In the method according to the invention, especially polyolefinic plastics, e.g. those based on polyethylene and polypropylene, but also other polymers based on heavier monomers (homopolymers and copolymers of PP, PS, and its copolymers, PVC, PA, and others) can be subjected to pyrolytic decomposition. Rubber or caoutchouc waste, which can be subjected to the process according to the invention is especially constituted of car tires.

Organic substances that can be subjected to pyrolysis are mainly constituted of biomass, that is, e.g. plant agricultural waste, wood, etc., or organic municipal waste varied in its composition. The method according to the invention may also be used in waste forming mixtures of the above mentioned substances. The method according to the invention can be carried out based on raw materials constituting a mixture of the above mentioned waste products.

### Example 1

The low-temperature pyrolysis process of a mixture of plastics (PE + PP + 20% PA) conducted at a temperature of 200-650°C in the installation shown in Figure 1.

PE + PP + 20% PA raw waste material in an amount of 20 tons/a day was subjected to fragmentation, and, through an airtight lock of the feeder, it was introduced into the pyrolytic reactor.

In the process, per each ton of raw material from plastics, 20% by weight of the dry gases, 20% of gasoline fraction and 55% of oil fraction and 5% of residual solids, which were formed from various types of fillers contained in the PP+PE+PA raw waste material.

### Example 2

Pyrolysis processes of rubber waste in the form of car tires - low-temperature process (200-530°C) carried out under reduced pressure in the installation according to Figure 1.

Raw waste material in an amount of 20 tons was subjected to fragmentation, and, through an airtight lock of the feeder, it was introduced into the pyrolytic reactor.

In the process, per each ton of raw material subjected to pyrolysis, 40% by weight of the solid residues (30% of metal residues and 10% of quick coke), 40% of large liquid hydrocarbon fraction, 20% by weight of the dry gases were obtained.

### Example 3

Pyrolysis process of polyolefin plastics (PE + PP) - low-temperature process (200 - 260°C) with the use of a chemical modifier

Preparation of pyrolysis modifier composition:
20% by weight of water, 30% by weight of isopropanol, 30% by weight of n-butanol, 10% by weight of carbamide and 10% by weight of monoacetylferrocene were mixed.

The results of analysis of physicochemical properties of the modifier (Composition A) are shown below.

| Analysis | Value | Unit | Method of determination |
|---|---|---|---|
| COMBUSTION HEAT | 8.2835 | MJ/kg | CALORIMETER |
| CHLORINE CONTENT | 0.0297 | % | ION CHROMATOGRAPHY |
| SULPHUR CONTENT | 0.0038 | % | ION CHROMATOGRAPHY |
| ASH | | % | PN-EN 15169 |
| FLASH POINT | >55 | °c | PN-EN ISO 3680 |
| pH | 2 | | TEST MN 902 04 |
| TEST H₂O₂ | 0 | mg/dm³ | TEST MN QUANTOFIX 913 12 |
| TEST NO₃ NO₂ | 0/0 | mg/dm³ | TEST MN QANTOFIX 913 13 |
| TEST CN⁻ | negative result | | TEST MN 906 04 |
| OXIDISING AGENTS | negative result | | TEST MN 907 54 |

Modifier composition was diluted with water as a carrier, so that the solution of 10% by weight of the above composition + 90% by weight of water was obtained.

PE + PP raw waste material in an amount of 20 tons was subjected to fragmentation, and, through an airtight lock of the feeder, it was introduced into the pyrolytic reactor. The modifier solution was dosed into the reactor through a nozzle, which ensures the provision of the solution at a rate of 100 ml/hour. The ratio of the dosed modifier solution was maintained at a level of about 100 ml of solution per 1 ton of the raw material subjected to pyrolysis. For 20 tons of raw material, 2000 ml of solution was used. In a continuous process of pyrolysis, 20 tons of raw material was processed within 24 hours. When providing the reactor with another portion of the raw material, another proportional portion of the modifier solution was dosed (1000 ml of solution per 10 tons of raw material). Modifier solution was dosed at the initial stage in a continuous manner, and then at intervals depending on other process parameters: temperature in the reactor, pressure, yield of fractions.

In the process, per each ton of raw material from plastics, 25% by weight of the dry gas, 20% of gasoline fraction and 50% of the oil fraction and 5% of residual solids, which were formed from various types of fillers contained in the raw waste material.

In the installation, no residual quick coke depositing on the walls or on the heating elements of the reactor was observed. At the same time, the amount of resulting carbon black was reduced by approximately 80% compared to the process without the use of the modifier.

### Example 4

The process of pyrolysis of rubber waste in the form of car tires with the addition of plastics - low-temperature process (200-530°C) carried out at reduced pressure in the installation according to Figure 1.

In the process, a chemical modifier, as in Example 3, was used, however, it was dosed into the reactor chamber at an amount of 400 ml/ton of raw material.

25 tons/day of waste tires, including 15% by weight of plastic waste (a mixture of PE + PP) was subjected to a low-temperature pyrolysis at 450-500°C.

The following was obtained (per day):
- 10 tons/day of liquid pyrolytic fraction having the following parameters: specific weight of 985 kg/m3, calorific value 49.5 MJ/kg and a sulfur content of 1.2%,
- 6 tons/day of the pyrolysis gas having the following parameters (% by weight): 32-40% nitrogen, 18-25% hydrogen, 10-18% carbon dioxide, 4-7% methane, 2.5-5% C₂-C₄ fraction, 0.5-0.7% oxygen, humidity up to 20%, specific weight of 0.8 kg/m3, calorific value of 8.25 MJ/kg;
- 7 tons/day of carbon black (granular 0.3-2 cm) with the following parameters (% by weight): specific weight of 930 kg/m3, calorific value of 27.25 MJ/kg, ashes 15%,
- 2 tons/day of metal cord.

The liquid and gaseous fractions produced in the pyrolysis process allow to obtain about 5 MW of capacity, which can be converted into electricity and heat.

List of reference numbers from drawing on Fig.1:
1 - pyrolytic reactor
2 - reactor heating zone
3 - raw material feeder
3a - airtight lock for loading the raw material
4 - fuel tank for the reactor start-up
5 - cyclone
6 - solid and gaseous particles separator
7 - tight aqueous closure and a safety valve
8 - fractional column of wet and dry gases
9 - discharge line for dry and wet gases of gasoline fraction
10 - discharge line for column filling reflux
11 - discharge line for oil fractions
12 - discharge line for heavy fraction
13 - cooler for fuel fraction
14 - cooler for oil fraction
15 - heat exchanger for mazout fractions
16 - separator of gaseous fraction of generator gas
17 - phase splitter for gasoline fraction delivered to tank 23
18 - phase splitter for oil fraction delivered to tank 22
19 - cooler supplying heat exchangers on the fractional column
20 - equalizing tank of the cooling system
21 - final product tank - mazout
22 - final product tank - oil fraction
23 - final product tank - gasoline fraction
24 - vacuum pump
25 - absorber of the discharged gases
26 - engine with a power generator

## Claims

1. A method of conducting a pyrolysis process of plastic waste and/or rubber waste and/or organic waste, comprising subjecting these components to a thermal decomposition in a pyrolytic reactor without access of air, at a temperature of 200 to 850°C, and separation of the obtained products in the fractional column, **characterized in that** the process is carried out continuously and without any emissions, under reduced pressure, wherein, in the pyrolytic installation, the circulating gases are sucked by means of a vacuum pump from the final product tanks and from the solid and gaseous particles separator, also connected to the pyrolytic reactor, and from the fractional column, and from the heat exchangers, so that in all of these interconnected components of the pyrolytic installation, an even reduced pressure of 0.1 to 0.9 atm is maintained.

2. The method according to claim 1, **characterized in that** the pressure is between 0.2 and 0.8 atm.

3. The method according to claim 1, **characterized in that** the vacuum pump is constituted by a pump with a rotating water ring.

4. The method according to claim 3, **characterized in that** the pyrolytic gases sucked by the vacuum pump are pre-purified in this pump by contacting with water in the form of a rotating water ring.

5. The method according to claim 1, **characterized in that** the gases sucked by the pump are pumped into the absorber, where they are subjected to further purification, and then, they are pumped into the engine as a feed gas.

6. The method according to claim 1, **characterized in that** the loading of the raw material into the reactor is carried out continuously by an airtight lock for the loading of raw materials and the solid products are collected from the lower part of the reactor chamber in a continuous manner through a tight aqueous closure.

7. The method according to claim 1, **characterized in that**, into the reactor chamber, a chemical modifier composition is dosed, preferably in the form of a spray, comprising 10 to 30% by weight of water, 20 to 80% by weight of at least one aliphatic alcohol, 5 to 15% by weight of carbamide or its derivatives of R1R2N(CO)NR3R4 type, wherein R1, R2, R3, R4 are the same or different and constitute C1-C6 alkyl groups, and 5 to 15% by weight of monoacetylferrocene, this composition being, before dosing into the reactor, additionally diluted with water, so that, after dilution, it contains 5% by weight of composition and 95% by weight of water, up to 15% by weight of composition and 85% of water.

8. The method according to claim 6, **characterized in that** 50 to 150 ml of the diluted modifier composition is dosed per 1 ton of plastic waste, especially polyolefinic, or 300 to 500 ml of the diluted composition per 1 ton of rubber waste.

9. An installation for conducting, under reduced pressure, without access of air, a continuous pyrolysis process of plastic waste and/or rubber waste and/or organic waste, comprising a pyrolytic reactor, a raw material feeder, a fractional column, heat exchangers and final product tanks, **characterized in that** it is provided with a vacuum pump (24) connected, on the suction side, through the separator (16), to the fractional column (8) and further to the reactor (1) and, also on the suction side, connected to the final product tanks (21, 22, 23), and on the pumping side, connected, through the absorber (25), to the engine (26), wherein the reactor (1) is provided with a raw material feeder (3) comprising an airtight lock (3a) and, in its lower part, is provided with an aqueous tight closure (7) for collecting solid products.

10. The installation according to claim 9, **characterized in that** the pump (24) is constituted by a vacuum pump with a rotating water ring.
